# EUROPÄISCHE PATENTSCHRIFT

(11) **EP 1 159 733 B1**
(45) Veröffentlichungstag und Bekanntmachung des Hinweises auf die Patenterteilung: **13.08.2003**
(21) Anmeldenummer: 00916780.0
(22) Anmeldetag: 01.03.2000
(51) Int. Cl.: G10L 13/06

(54) **VERFAHREN UND ANORDNUNG ZUR BESTIMMUNG EINES REPRÄSENTATIVEN LAUTES**
METHOD AND ARRAY FOR DETERMINING A REPRESENTATIVE PHONEME
PROCEDE ET DISPOSITIF POUR LA DETERMINATION D'UN PHONEME REPRESENTATIF

(30) Priorität: 08.03.1999 DE 19910043
(43) Veröffentlichungstag der Anmeldung: 05.12.2001
(73) Patentinhaber: SIEMENS AKTIENGESELLSCHAFT, 80333 München (DE)
(72) Erfinder: HOLZAPFEL, Martin, D-80933 München (DE)
(86) Internationale Anmeldenummer: DE0000601
(87) Internationale Veröffentlichungsnummer: WO00054254

(56) Entgegenhaltungen:
- EP-A- 0 953 970
- DONOVAN R E ET AL: "AUTOMATIC SPEECH SYNTHESISER PARAMETER ESTIMATION USING HMMS" PROCEEDINGS OF THE INTERNATIONAL CONFERENCE ON ACOUSTICS, SPEECH, AND SIGNAL PROCESSING (ICASSP),US,NEW YORK, IEEE, 1995, Seiten 640-643, XP000658075 ISBN: 0-7803-2432-3 in der Anmeldung erwähnt
- BAHL L R ET AL: "A FAST MATCH FOR CONTINUOUS SPEECH RECOGNITION USING ALLOPHONIC MODELS" PROCEEDINGS OF THE INTERNATIONAL CONFERENCE ON ACOUSTICS, SPEECH AND SIGNAL PROCESSING (ICASSP),US,NEW YORK, IEEE, Bd. CONF. 17, 1992, Seiten I17-I20, XP000341073 ISBN: 0-7803-0532-9

## Beschreibung

Die Erfindung betrifft ein Verfahren und eine Anordnung zur Erzeugung eines Lautes.

Eine solche Anordnung und ein solches Verfahren sind aus [1] bekannt. Dort wird ein Entscheidungsbaum erzeugt, der seinerseits eine Clusterbildung zur Modellierung von Triphonen ermöglicht. Dazu werden eine Reihe von Fragen, die unmittelbar einen phonetischen Kontext betreffen und mit ja oder nein beantwortet werden können, eingesetzt. Durch jede Antwort wird ein weiterer Unterbaum aufgespannt. Somit werden Trainingsdaten natürlichgesprochener Sprache auf die Zweige und schließlich Blätter des Entscheidungsbaumes abgebildet.

Der Entscheidungsbaum wird daraufhin eingesetzt zur Berechnung der zu verwendenden Blätter, um Hidden-Markov-Modelle für alle möglichen Triphone, die nicht durch die Trainingsdaten abgedeckt sind, zu bestimmen.

Hidden-Markov-Modelle (HMM) zur Modellierung von Lauten sind aus [2] bekannt. Bei der sprachlichen Produktion eines Wortes werden die konstituierenden Laute mit variabler Dauer und in unterschiedlicher spektraler Zusammensetzung realisiert. Abhängig von Sprechtempo und -rhythmus entfällt auf jedes einzelne phonetische Segment der Äußerung eine nicht vorhersagbare Anzahl von Merkmalsvektoren; jeder Vektor umfaßt neben seinem phonetischen Gehalt auch sprecher-, umgebungs- und verschleifungsbedingte Informationsanteile, die eine lautliche Identifikation deutlich erschweren.

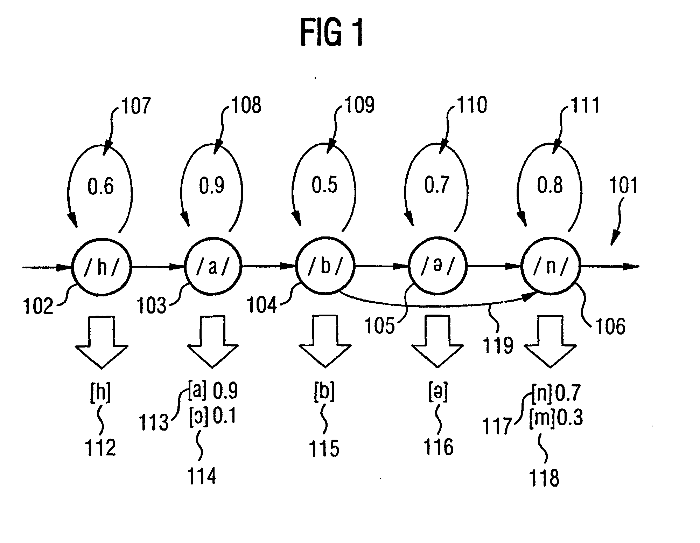

Diese Verhältnisse lassen sich vereinfachend durch eine zweistufigen Prozeß modellieren, wie Fig.1 am Beispiel des Wortes "haben" zeigt. Für die Phoneme des Wortes sind im Modell eine entsprechende Anzahl von Zuständen 102 bis 106 reserviert, die zur Sprachproduktion entlang der Pfeilrichtung 101 durchlaufen werden. Zu jedem Zeittakt ist ein Verbleiben im aktuellen Zustand oder ein Übergang zu dem Nachfolgezustand möglich; das System verhält sich statistisch und wird von den eingezeichneten Übergangswahrscheinlichkeiten 107 bis 111 bestimmt. So wird beispielsweise der zu dem Phonem /a/ gehörende Zustand 103 über mehrere (im Mittel über zehn) aufeinanderfolgende Kurzzeitanalyseintervalle hinweg eingenommen, Realisierungen des Plosivs /b/ hingegen nehmen weniger Zeit in Anspruch.

Während die beschriebene erste Stufe des Zufallsprozesses die zeitliche Verzerrung unterschiedlicher Aussprachevarianten modelliert, dient eine zweite Stufe der Erfassung spektraler Variationen. An jeden Zustand des Wortmodells ist eine statistische Ausgabefunktion gebunden, welche die phonetischen Realsierungsalternativen gewichtet. Im Beispiel von Fig.1 werden zur Produktion des Phonems /a/ neben der eigentlich passenden Phonklasse 113 auch die Phonklasse 114 mit einer positiven Wahrscheinlichkeit (hier: 0,1) zugelassen. Ebenfalls zugelassen wird die Phonklasse 118 zur Produktion des Phonems /n/ mit einer Wahrscheinlichkeit von 0,3. Auch erlaubt der beschriebene Formalismus eine Beschreibung einer optionalen Lautelimination, ausgedrückt durch die "Überbrückung" 119 des Zustands 105 durch einen direkten Übergang zwischen den Zuständen 104 und 106. Die Überbrückung ist beispielhaft mit einer Wahrscheinlichkeit von 0,2 belegt.

Die Übergangswahrscheinlichkeiten des Hidden-Markov-Modells können anhand von Trainingsdaten ermittelt werden. Das fertig trainierte HMM stellt dann eine Vorschrift zur Produktion von Lautfolgen dar (vgl. [2], Seiten 127-139). Eine Methode zum Trainieren des HMMs ist der Einsatz des Baum-Welch-Algorithmus.

Nun ist es bei dem in [1] beschriebenen Verfahren von Nachteil, daß in dem Entscheidungsbaum nur die jeweils gefundenen Blätter zur Lautmodellierung eingesetzt werden.

Die **Aufgabe** der Erfindung besteht darin, bei der Bestimmung eines repräsentativen Lautes (aus einer Vielzahl von Lauten) zusätzlich zu einer Struktur, die nach vorgegebenen Kriterien konstruiert ist, ein Beschaffenheitskriteriums dieser Struktur zu berücksichtigen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Bestimmung eines repräsentativen Lauts anhand einer Struktur angegeben, die eine Menge von Lautmodellen umfaßt, wobei jedes Lautmodell mindestens einen Repräsentanten für den modellierten Laut aufweist. In der Struktur wird ein im Hinblick auf ein erstes Gütekriterium passendes erstes Lautmodell aus der Menge der Lautmodelle bestimmt. Abhängig von einem Beschaffenheitskriterium der Struktur wird mindestens ein zweites Lautmodell aus der Menge der Lautmodelle ermittelt. (Alle oder ein Teil der) Repräsentanten des ersten Lautmodells und des mindestens einen zweiten Lautmodells werden zusätzlich zu dem ersten Gütekriterium im Hinblick auf ein zweites Gütekriterium beurteilt. Aus den Repräsentanten des ersten und des mindestens einen zweiten Lautmodells wird derjenige mindestens eine Repräsentant als repräsentativer Laut bestimmt, der im Hinblick auf das erste und das zweite Gütekriterium ein ausreichendes Gesamtgütekriterium aufweist.

Entsprechend der Ordnung der Struktur wird für den zu erzeugenden Laut innerhalb der Struktur nach einem passenden Lautmodell gesucht. Dabei gilt "passend" im Hinblick auf das erste Gütekriterium, das insbesondere durch die Struktur vorgegeben ist.

Die Struktur kann als eine Baumstruktur, bevorzugt als ein Binärbaum, ausgeführt sein. Eine solche Baumstruktur weist Knoten (zur Verkörperung der Lautmodelle), Äste (zur hierarchischen Unterteilung der Lautmodelle abhängig von den Kriterien, nach denen die Struktur aufgebaut ist) und Blätter (Knoten, von denen kein weiterer Ast abgeht) auf.

Nun wird die anhand vorgegebener Kriterien aufgebaute Struktur eingesetzt, um abhängig von der Beschaffenheit der Struktur (insbesondere der Baumstruktur) mindestens ein zweites Lautmodell aus der Menge der Lautmodelle zu ermitteln. Dabei kann das Beschaffenheitskriterium in der Struktur ein Abstandsmaß von dem ersten Lautmodell sein. Im Falle des Binärbaums als Struktur können alle Lautmodelle innerhalb eines vorgegebenen Abstands zu dem ersten Lautmodell als zweite Lautmodelle betrachtet werden. Hierbei ist der Begriff "Abstand" nicht notwendigerweise lokal auszulegen, vielmehr kann es sich bei besagtem "Abstand" auch um ein Abstandsmaß hinsichtlich eines oder mehrerer vorgegebener Kriterien handeln.

Mit dem ersten Lautmodell und einer Menge zweiter Lautmodelle, die das Beschaffenheitskriterium erfüllen und zu dem ersten Lautmodell den vorgegebenen Abstand aufweisen, wird für die Repräsentanten der Lautmodelle, ein zweites Gütekriterium ermittelt. Das Gesamtgütekriterium für jeden Repräsentanten setzt sich zusammen aus dem ersten und dem mindestens einen zweiten Gütekriterium. Ein Kandidat unter den Repräsentanten, der sich zur Erzeugung des Lautes eignet, ist bestimmt durch sein "ausreichendes" Gesamtgütekriterium, also ein Gesamtgütekriterium, das einen vorgegebenen Mindestwert aufweist.

Dabei ist es eine Weiterbildung, daß das Gesamtgütekriterium eine arithmetische Kombination der Gütekriterien ist.

Insbesondere ist es eine Weiterbildung, daß ein Repräsentant des mindestens einen zweiten Lautmodells zusätzlich mit einer aus dem Beschaffenheitskriterium hervorgehenden verringerten Güte gegenüber einem Repräsentanten des ersten Lautmodells versehen wird. Hier fließt bevorzugt der oben genannte Abstand des mindestens einen zweiten Lautmodells zu dem ersten Lautmodell ein: Ein großer Abstand spricht für eine große Abweichung von dem ursprünglich gemäß der Struktur als passend befundenen ersten Lautmodell. Für solch einen großen Abstand wird eine Art "Strafmaß" für den Repräsentanten des mindestens einen zweiten Lautmodells vergeben, welches Strafmaß sich auf das Gesamtgütekriterium auswirkt.

Eine Ausgestaltung besteht darin, daß ein im Hinblick auf das Gesamtgütekriterium bester Repräsentant als repräsentativer Laut bestimmt wird.

Eine andere Ausgestaltung ist es, daß die Struktur nach mindestens einem der folgenden Kriterien konstruiert ist:
a) linguistische Kriterien, z.B. grammatikalische Eigenschaften eines Wortes;
b) artikulatorische Kriterien, insbesondere der Ort der Artikulation;
c) phonetische Kriterien, z.B. klassifiziert nach plosiven oder nasalen Lauten.

Eine zusätzliche Weiterbildung besteht darin, daß der Laut als eine der folgenden Möglichkeiten ausgebildet sein kann:
a) Phonem,
b) Diphon,
c) Triphon,
d) Silbe,
e) Silbenkombination,
f) Wort,
g) Wortkombination.

Auch ist es eine Ausgestaltung, daß, sofern der Laut eine Lautkombination darstellt, ein Aufbau der Struktur nach Kontextkriterien des Lauts innerhalb der Lautkombination erfolgt. Damit ist insbesondere gemeint, daß bei einer Lautkombination eine Fragestellung in der Art
"Ist der Laut links von dem aktuellen Laut ein Vokal?" oder
"Ist der Laut links von dem aktuellen Laut ein Plosiv?" jeweils mit JA oder NEIN beantwortet werden kann und damit der Rechts- bzw. Linkskontext zum Aufbau der Struktur, insbesondere des Binärbaums, eingesetzt wird.

Im Rahmen einer zusätzlichen Ausgestaltung ist das Lautmodell in Form eines Hidden-Markov-Modells (HMM) gegeben.

Eine Weiterbildung besteht darin, daß eine Auswahl von n Repräsentanten, die jeweils aufgrund ihres Gesamtgütekriteriums am besten Bestimmung des repräsentativen Lautes geeignet sind, dargestellt werden. Die Zahl n ist dabei anwendungsabhängig vorgebbar, die besten Repräsentanten werden bevorzugt in Form einer Liste dargestellt.

Ferner ist es eine Ausgestaltung, daß das erste Lautmodell für die Bestimmung des repräsentativen Lauts bestimmt ist, sobald durch eine weitergehende Suche in der Struktur - insbesondere der Baumstruktur - keine Verbesserung des ersten Gütekriteriums mehr erzielbar ist.

Eine andere Ausgestaltung besteht darin, daß das erste Lautmodell bestimmt ist, sobald zu einem Lautmodell aus der Menge der Lautmodelle mit möglicherweise besserem ersten Gütekriterium, weniger Repräsentanten verfügbar sind, als zu einer Bestimmung des repräsentativen Lautes benötigt werden. Mit anderen Worten werden nur solche Lautmodelle auf der Suche nach einem ausreichend guten ersten Lautmodell berücksichtigt, die mehr Repräsentanten beinhalten als durch einen Schwellwert vorgegebenen ist.

Im Rahmen einer weiteren Ausgestaltung erfolgt für jedes zweite Gütekriterium eine Fuzzy-Logic-Bewertung. Dadurch wird sichergestellt, daß pro zweitem Gütekriterium eine eigene Bewertung erfolgt, die im Hinblick auf eine Vergleichbarkeit mit anderen Bewertungen insbesondere normalisiert durchgeführt wird. Ein geeignetes Verfahren zu solch einer normalisierten Bewertung stellt die Fuzzy-Logic bereit.

Auch ist es eine Ausgestaltung, daß das oben beschriebene Verfahren in der Sprachverarbeitung, insbesondere in der Sprachsynthese eingesetzt wird.

Ferner wird zur Lösung der Aufgabe eine Anordnung zur Bestimmung eines repräsentativen Lautes anhand einer Struktur, die eine Menge von Lautmodellen umfaßt, wobei jedes Lautmodell mindestens einen Repräsentanten für den modellierten Laut aufweist, angegeben, welche Anordnung eine Prozessoreinheit aufweist, die derart eingerichtet ist, daß
a) in der Struktur ein im Hinblick auf ein erstes Gütekriterium passendes erstes Lautmodell aus der Menge der Lautmodelle bestimmbar ist;
b) abhängig von einem Beschaffenheitskriterium der Struktur mindestens ein zweites Lautmodell aus der Menge der Lautmodelle ermittelbar ist;
c) Repräsentanten des ersten und des mindestens einen zweiten Lautmodells zusätzlich zu dem ersten Gütekriterium im Hinblick auf ein zweites Gütekriterium beurteilbar sind;
d) derjenige mindestens eine Repräsentant als repräsentativer Laut bestimmbar ist, der ein im Hinblick auf das erste und das zweite Gütekriterium ausreichendes Gesamtgütekriterium aufweist.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen
- Fig.1: eine Skizze zur Sprachmodellierung mittels HMM;
- Fig.2: ein Beispiel für eine Struktur, insbesondere einen binären Entscheidungsbaum;
- Fig.3: ein Blockdiagramm eines Verfahrens zur Erzeugung bzw. zur Bestimmung eines repräsentativen Lautes;
- Fig.4: eine Tabellendarstellung mit einer Auswahl von Repräsentanten;
- Fig.5: eine Prozessoreinheit.

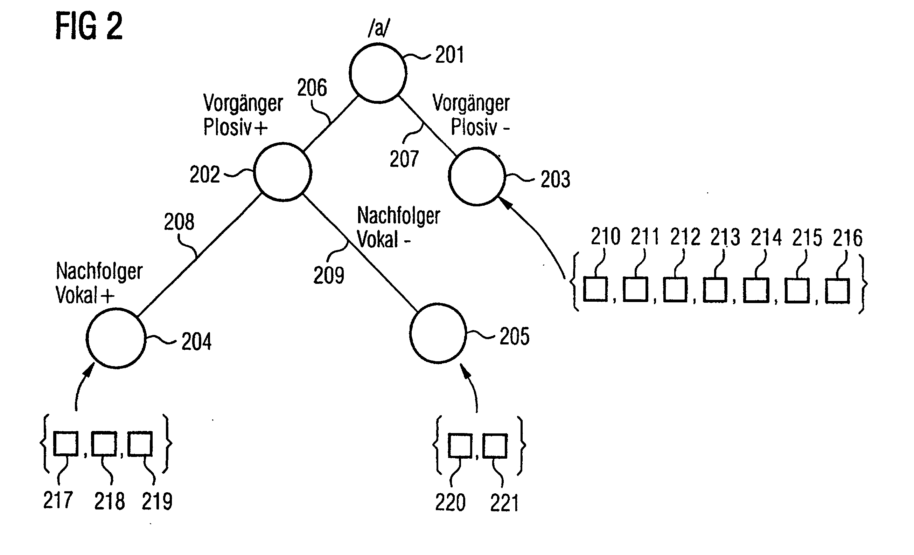

In **Fig.2** ist ein Beispiel für eine Struktur, insbesondere ein binärer Entscheidungsbaum, dargestellt. Der Entscheidungsbaum ist nur ein kleiner Teil eines weitaus größeren Systems und dient der Veranschaulichung der bereits gemachten und nachfolgenden Ausführungen.

Der Entscheidungsbaum umfaßt Knoten 201 bis 205, von denen der Knoten 201 auch als Wurzel und die Knoten 203, 204 und 205 als Blätter des Baumes bezeichnet werden. Ferner weist der Baum Kanten 206 bis 209 auf, entlang deren eine Entscheidung nachvollzogen werden kann. Durch eine Vielzahl von nacheinander durchgeführten Entscheidungen wird der gesamte Entscheidungsbaum aufgebaut.

Im Beispiel von Fig.2 wird ausgegangen von einem Lautmodell /a/ (vgl. Knoten 201), für das überprüft wird, ob der Vorgängerlaut ein Plosiv(laut) ist oder nicht. Handelt es sich bei dem Vorgänger um einen Plosivlaut, so wird entlang der Kante 206 zu dem Knoten 202 verzweigt. Ansonsten wird entlang der Kante 207 zu dem Knoten (Blatt) 203 verfahren. Der Knoten 203 steht wieder für ein Lautmodell, dem sieben Repräsentanten (tatsächliche Laute) 210 bis 216 zugeordnet sind. Das Sprachmodell in Knoten 203 kann weiter verfeinert werden (nicht dargestellt). Ausgehend von Knoten 202 wird untersucht, ob zusätzlich zu der erfüllten Bedingung 206 der Nachfolger zu dem Laut /a/ ein Vokal ist oder nicht. Ist dies der Fall, so wird entlang der Kante 208 zu Knoten 204, ansonsten entlang der Kante 209 zu Knoten 205 verzweigt. Der Knoten 204 steht für ein Lautmodell, das die Repräsentanten 217, 218 und 219 enthält, Knoten 205 steht für ein Lautmodell, das die Repräsentanten 220 und 221 enthält. Die Größen der Mengen der Repräsentanten dienen in Fig.2 der Veranschaulichung. Abhängig vom tatsächlichen Anwendungsfall können Lautmodelle, die weniger als z.B. 5 Repräsentanten haben, nicht sinnvoll eingesetzt werden.

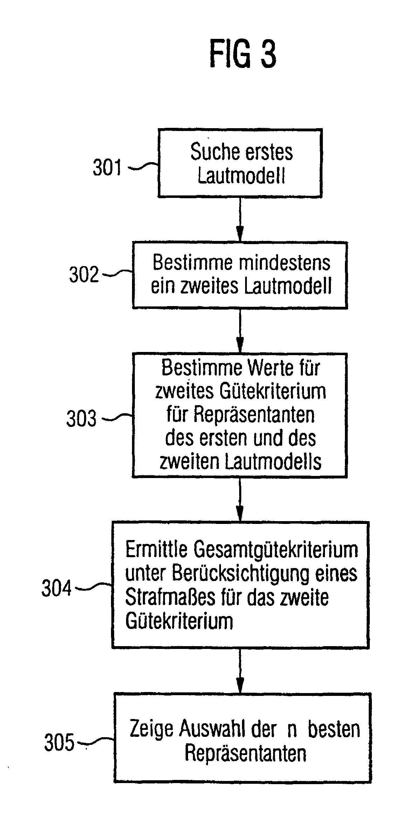

In **Fig.3** ist ein Verfahren zur Erzeugung eines Lautes anhand eines Blockdiagramms dargestellt. Die Erzeugung des Lautes erfolgt anhand einer Struktur - insbesondere anhand des in Fig.2 dargestellten binären Entscheidungsbaums -, wobei die Struktur eine Menge von Lautmodellen aufweist, deren jedes mindestens einen Repräsentanten für den modellierten Laut aufweist. In einem Schritt 301 wird ein erstes Lautmodell in der Struktur ermittelt, das im Hinblick auf den zu erzeugenden Laut ein ausreichendes erstes Gütekriterium aufweist. "Ausreichend" bedeutet in diesem Zusammenhang insbesondere, daß ein Vergleich mit einem vorgegebenen Schwellwert positiv war. Abhängig von einem Beschaffenheitskriterium der Struktur - insbesondere einem Abstand innerhalb der Struktur - wird mindestens ein zweites Lautmodell ermittelt (siehe Schritt 302). Für Repräsentanten des ersten und des mindestens einen zweiten Lautmodells werden in einem Schritt 303 jeweils ein weiteres Gütekriterium, wobei das zweite Gütekriterium mehrere Unterkriterien umfassen kann, bestimmt. In einem Schritt 304 wird ein Gesamtgütekriterium ermittelt unter Berücksichtigung eines Strafmaßes für das zweite Gütekriterium. Das durch das Beschaffenheitskriterium ausgewählte mindestens eine zweite Lautmodell wird mit dem Strafmaß bedacht, da ursprünglich gemäß der Struktur die Suche mit dem ersten Lautmodell beendet war. Eine Abweichung von diesem ersten Lautmodell muß eine deutliche Verbesserung im Hinblick auf das zweite Gütekriterium bringen, um eine Abweichung von dem ersten zu dem zweiten Lautmodell zu rechtfertigen. Dabei werden die Werte für die Gütekriterien bevorzugt anhand der Repräsentanten selbst ermittelt. Ein Wert für die Abweichung (Abstand) erfolgt anhand unterschiedlicher Bewertungen. In einem Schritt 305 werden die n besten Repräsentanten dargestellt, je nach Anwendung kann ein passender ausgesucht werden. Dabei können zusätzlich die Gütekriterien einzeln gewichtet werden, so daß jede Anwendung den für ihren Zweck "besten" Repräsentanten zur Erzeugung des Lautes bestimmen kann.

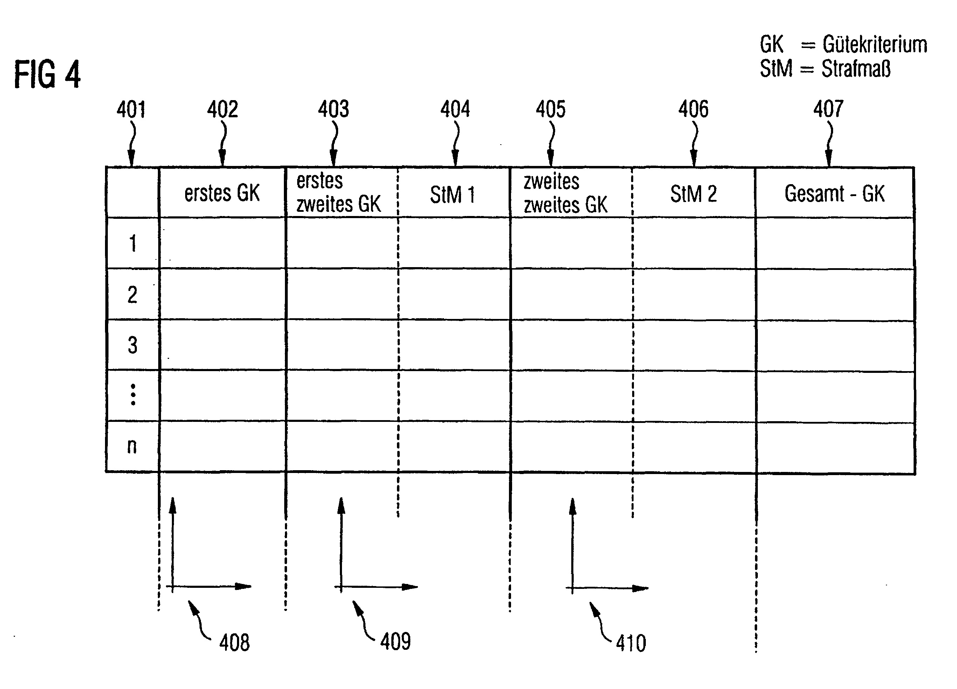

**Fig.4** zeigt eine Listendarstellung der sich ergebenden Repräsentanten 1,2,..,n (vgl. Spalte 401). Jeder Repräsentant 401 wird anhand des ersten Gütekriteriums (GK) 402, eines ersten zweiten Gütekriteriums 403 mit zugehörigem Strafmaß StM1 404 und eines zweiten zweiten Gütekriteriums 405 mit zugehörigem Strafmaß StM2 406 zu einem Gesamtgütekriterium 407 bewertet. Die Bewertung selbst erfolgt über eine Fuzzy-Logic 408, 409 und 410, die für eine Vergleichbarkeit der in den Spalten 402 bis 406 eingetragenen Werte sorgt. Durch die einzelnen Fuzzy-Kennlinien 408 bis 410 kann eine gezielte Gewichtung der Gütekriterien erfolgen. Alternativ kann das Strafmaß 404 oder 406 auch in die Kennlinien 409 oder 410 aufgenommen werden.

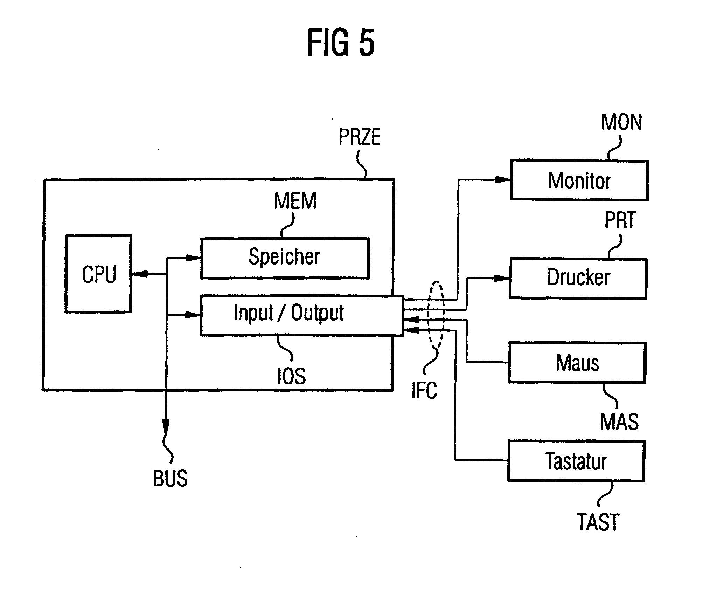

In **Fig.5** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

### Literaturverzeichnis:

- [1]: R.E.Donovan et al.: "Automatic Speech Synthesiser Parameter Estimation using HMMs", IEEE 1995, pp.640-643.
- [2]: E.G.Schukat-Talamazzini: Automatische Spracherkennung - Grundlagen, statistische Modelle und effiziente Algorithmen, Vieweg & Sohn Verlagsgesellschaft mbH, Braunschweig/Wiesbaden 1995, Seiten 125-139.

## Patentansprüche

1. Verfahren zur Bestimmung eines repräsentativen Lautes anhand einer Struktur, die eine Menge von Lautmodellen umfaßt, wobei jedes Lautmodell mindestens einen Repräsentanten für den modellierten Laut aufweist,
a) bei dem in der Struktur ein im Hinblick auf ein erstes Gütekriterium passendes erstes Lautmodell aus der Menge der Lautmodelle bestimmt wird;
b) bei dem abhängig von einem Beschaffenheitskriterium der Struktur mindestens ein zweites Lautmodell aus der Menge der Lautmodelle ermittelt wird;
c) bei dem Repräsentanten des ersten und des mindestens einen zweiten Lautmodells zusätzlich zu dem ersten Gütekriterium im Hinblick auf ein zweites Gütekriterium beurteilt werden;
d) bei dem derjenige mindestens eine Repräsentant als repräsentativer Laut bestimmt wird, der ein im Hinblick auf das erste und das zweite Gütekriterium ausreichendes Gesamtgütekriterium aufweist.

2. Verfahren nach Anspruch 1,
bei dem ein Repräsentant des mindestens einen zweiten Lautmodells zusätzlich mit einer aus dem Beschaffenheitskriterium hervorgehenden verringerten Güte gegenüber einem Repräsentanten des ersten Lautmodells beaufschlagt wird.

3. Verfahren nach Anspruch 1 oder 2,
bei dem das Gesamtgütekriterium eine arithmetische Kombination der Gütekriterien ist.

4. Verfahren nach einem der vorhergehenden Ansprüche,
bei dem ein bester Repräsentant im Hinblick auf das Gesamtgütekriterium als repräsentativer Laut bestimmt wird.

5. Verfahren nach einem der vorhergehenden Ansprüche,
bei dem die Struktur eine Baumstruktur ist.

6. Verfahren nach einem der vorhergehenden Ansprüche,
bei dem die Struktur nach mindestens einem der folgenden Kriterien aufgebaut ist:
d) linguistische Kriterien,
e) artikulatorische Kriterien,
f) phonetische Kriterien.

7. Verfahren nach einem der vorhergehenden Ansprüche,
bei dem der Laut als eine der folgenden Möglichkeiten ausgebildet sein kann:
h) Phonem,
i) Diphon,
j) Triphon,
k) Silbe,
1) Silbenkombination,
m) Wort,
n) Wortkombination.

8. Verfahren nach einem der vorhergehenden Ansprüche,
bei dem, falls der Laut eine Lautkombination umfaßt, ein Aufbau der Struktur nach Kontextkriterien des Lauts innerhalb der Lautkombination erfolgt.

9. Verfahren nach einem der vorhergehenden Ansprüche,
bei dem das Beschaffenheitskriterium der Struktur anhand eines vorgegebenen Abstands innerhalb der Struktur gegeben ist.

10. Verfahren nach einem der vorhergehenden Ansprüche,
bei dem das Lautmodell ein Hidden-Markov-Modell ist.

11. Verfahren nach einem der vorhergehenden Ansprüche,
bei dem eine Auswahl der n Repräsentanten, die aufgrund ihres jeweiligen Gesamtgütekriteriums am besten zur Bestimmung des repräsentativen Lautes geeignet sind, dargestellt werden.

12. Verfahren nach einem der vorhergehenden Ansprüche,
bei dem das erste Lautmodell bestimmt ist sobald durch eine weitere Suche in der Struktur keine Verbesserung des ersten Gütekriteriums mehr erzielt wird.

13. Verfahren nach einem der vorhergehenden Ansprüche,
bei dem das erste Lautmodell bestimmt ist, sobald zu einem Lautmodell mit möglicherweise besserem ersten Gütekriterium weniger Repräsentanten verfügbar sind, als zu einer Bestimmung des repräsentativen Lautes benötigt würden.

14. Verfahren nach einem der vorhergehenden Ansprüche,
bei dem für jedes zweite Gütekriterium ein Fuzzy-Logic-Bewertung erfolgt.

15. Verfahren nach einem der vorhergehenden Ansprüche,
bei dem das Gesamtgütekriterium dann für die Bestimmung des repräsentativen Lautes dann ausreicht, wenn ein vorgegebener Schwellwert für das Gesamtgütekriterium erreicht wird.

16. Verfahren nach einem der vorhergehenden Ansprüche zum Einsatz in der Sprachverarbeitung.

17. Verfahren nach einem der vorhergehenden Ansprüche zum Einsatz in der Sprachsynthese.

18. Anordnung zur Bestimmung eines repräsentativen Lautes anhand einer Struktur, die eine Menge von Lautmodellen umfaßt, wobei jedes Lautmodell mindestens einen Repräsentanten für den modellierten Laut aufweist,
mit einer Prozessoreinheit, die derart eingerichtet ist, daß
e) in der Struktur ein im Hinblick auf ein erstes Gütekriterium passendes erstes Lautmodell aus der Menge der Lautmodelle bestimmbar ist;
f) abhängig von einem Beschaffenheitskriterium der Struktur mindestens ein zweites Lautmodell aus der Menge der Lautmodelle ermittelbar ist;
g) Repräsentanten des ersten und des mindestens einen zweiten Lautmodells zusätzlich zu dem ersten Gütekriterium im Hinblick auf ein zweites Gütekriterium beurteilbar sind;
h) derjenige mindestens eine Repräsentant als repräsentativer Laut bestimmbar ist, der ein im Hinblick auf das erste und das zweite Gütekriterium ausreichendes Gesamtgütekriterium aufweist.

## Claims

1. Method for determining a representative sound on the basis of a structure which comprises a set of sound models, each sound model having at least one representative for the modelled sound,
a) in which, in the structure, a first sound model, matching with regard to a first quality criterion, is determined from the set of sound models;
b) in which, dependent on a characteristic state criterion of the structure, at least one second sound model is determined from the set of sound models;
c) in which representatives of the first and the at least one second sound model are assessed in addition to the first quality criterion with regard to a second quality criterion;
d) in which that at least one representative which has an adequate overall quality criterion with regard to the first and second quality criteria is determined as a representative sound.

2. Method according to Claim 1, in which a representative of the at least one second sound model is additionally provided with a reduced quality, resulting from the characteristic state criterion, in comparison with a representative of the first sound model.

3. Method according to Claim 1 or 2, in which the overall quality criterion is an arithmetic combination of the quality criteria.

4. Method according to one of the preceding claims, in which a best representative, with regard to the overall quality criterion, is determined as the representative sound.

5. Method according to one of the preceding claims, in which the structure is a tree structure.

6. Method according to one of the preceding claims, in which the structure is constructed on the basis of at least one of the following criteria:
a) linguistic criteria,
b) articulatory criteria,
c) phonetic criteria.

7. Method according to one of the preceding claims, in which the sound may be formed as one of the following possibilities:
a) phoneme,
b) biphone,
c) triphone,
d) syllable,
e) combination of syllables,
f) word,
g) combination of words.

8. Method according to one of the preceding claims, in which, if the sound represents a combination of sounds, a construction of the structure takes place on the basis of context criteria of the sound within the combination of sounds.

9. Method according to one of the preceding claims, in which the characteristic state criterion of the structure is based on a predetermined distance within the structure.

10. Method according to one of the preceding claims, in which the sound model is a hidden Markov model.

11. Method according to one of the preceding claims, in which a selection of the n representatives which, on the basis of their respective overall quality criterion, are best suited for determining the representative sound is represented.

12. Method according to one of the preceding claims, in which the first sound model is determined as soon as no improvement of the first quality criterion can be achieved any longer by a further search in the structure.

13. Method according to one of the preceding claims, in which the first sound model is determined as soon as fewer representatives than would be required for the determination of the representative sound are available with respect to a sound model with a possibly better first quality criterion.

14. Method according to one of the preceding claims, in which a fuzzy logic assessment is performed for each second quality criterion.

15. Method according to one of the preceding claims, in which the overall quality criterion is adequate for the determination of the representative sound whenever a predetermined threshold value for the overall quality criterion is reached.

16. Method according to one of the preceding claims for use in speech processing.

17. Method according to one of the preceding claims for use in speech synthesis.

18. Arrangement for determining a representative sound on the basis of a structure which comprises a set of sound models, each sound model having at least one representative for the modelled sound, having a processor unit which is set up in such a way that
a) in the structure, a first sound model, matching with regard to a first quality criterion, can be determined from the set of sound models;
b) dependent on a characteristic state criterion of the structure, at least one second sound model can be determined from the set of sound models;
c) representatives of the first and the at least one second sound model can be assessed in addition to the first quality criterion with regard to a second quality criterion;
d) that at least one representative which has an adequate overall quality criterion with regard to the first and second quality criteria can be determined as a representative sound.

## Revendications

1. Procédé destiné à déterminer un phonème représentatif à l'aide d'une structure comportant un ensemble de modèles de phonèmes, chaque modèle de phonème comportant au moins un représentant pour le phonème modélisé,
a) au cours duquel on détermine, dan's la structure, parmi l'ensemble de modèles de phonèmes, un premier modèle de phonème adéquat au regard d'un premier critère de qualité;
b) au cours duquel on détermine, en fonction d'un critère de constitution de la structure, parmi l'ensemble dé modèles de phonèmes, au moins un deuxième modèle de phonème;
c) au cours duquel on apprécie, au regard d'un deuxième critère de qualité en plus du premier critère de qualité, des représentants du premier et du (au moins un) deuxième modèle de phonème;
d) au cours duquel on détermine, en tant que phonème représentatif, le (au moins un) représentant qui présente un critère de qualité globale suffisant au regard du premier et du deuxième critère de qualité.

2. Procédé selon la revendication 1
au cours duquel on impose, en plus, à un représentant du (au moins un) deuxième modèle de phonème une qualité découlant du critère de constitution et réduite par rapport à un représentant du premier modèle de phonème.

3. Procédé selon la revendication 1 ou 2
dans lequel le critère de qualité globale est une combinaison arithmétique des critères de qualité.

4. Procédé selon l'une des revendications précédentes
au cours duquel on détermine, en tant que phonème représentatif, un représentant considéré comme le meilleur au regard du critère de qualité globale.

5. Procédé selon l'une des revendications précédentes
dans lequel la structure est une structure arborescente.

6. Procédé selon l'une des revendications précédentes
dans lequel la structure est constituée selon au moins un des critères suivants:
d) critères linguistiques,
e) critères d'articulation,
f) critères phonétiques.

7. Procédé selon l'une des revendications précédentes
dans lequel le phonème peut être conçu selon l'une des possibilités suivantes:
h) phonème,
i) biphone,
j) triphone,
k) syllabe,
l) combinaison de syllabes,
m) mot,
n) combinaison de mots.

8. Procédé selon l'une des revendications précédentes
dans lequel, pour le cas où le phonème comporte une combinaison de phonèmes, la constitution de la structure a lieu selon des critères de contexte du phonème à l'intérieur de la combinaison de phonèmes.

9. Procédé selon l'une des revendications précédentes
dans lequel le critère de constitution de la structure est donné à l'aide de l'écart prédéterminé à l'intérieur de la structure.

10. Procédé selon l'une des revendications précédentes
dans lequel le modèle de phonème est un modèle caché de Markov.

11. Procédé selon l'une des revendications précédentes
dans lequel on représente une sélection de n représentants qui sont le mieux appropriés pour la détermination du phonème représentatif sur la base de leur critère respectif de qualité globale.

12. Procédé selon l'une des revendications précédentes
dans lequel le premier modèle de phonème est déterminé dès qu'on ne parvient plus à aucune amélioration du premier critère de qualité lors de la poursuite de la recherche dans la structure.

13. Procédé selon l'une des revendications précédentes
dans lequel le premier modèle de phonème est déterminé dès que, pour un modèle de phonème ayant éventuellement un meilleur premier critère de qualité, moins de représentants sont disponibles qu'il n'est nécessaire pour la détermination du phonème représentatif.

14. Procédé selon l'une des revendications précédentes
dans lequel, pour chaque deuxième critère de qualité, on procède à une évaluation par logique floue (ou fuzzy-logic).

15. Procédé selon l'une des revendications précédentes
dans lequel le critère de qualité globale suffit pour la détermination du phonème représentatif dès qu'on parvient à une valeur seuil donnée pour le critère de qualité globale.

16. Procédé selon l'une des revendications précédentes
destiné au traitement de la parole.

17. Procédé selon l'une des revendications précédentes
destiné à la synthèse de la parole.

18. Dispositif destiné à la détermination d'un phonème représentatif à l'aide d'une structure qui comporte un ensemble de modèles de phonèmes, chaque modèle de phonème comportant au moins un représentant pour le phonème modélisé, et ayant une unité à processeur conçue de telle sorte que
e) dans la structure, on peut déterminer, parmi l'ensemble de modèles de phonèmes, un premier modèle de phonème adéquat au regard d'un premier critère de qualité;
f) en fonction d'un critère de constitution de la structure, on peut déterminer parmi l'ensemble de modèles de phonèmes, au moins un deuxième modèle de phonème;
g) des représentants du premier et du (au moins un) deuxième modèle de phonème peuvent être appréciés au regard d'un deuxième critère de qualité en plus du premier critère de qualité;
h) le (au moins un) représentant qui présente un critère suffisant de qualité globale au regard du premier et du deuxième critère de qualité peut être déterminé en tant que phonème représentatif.
